# EUROPÄISCHE PATENTSCHRIFT

(11) **EP 0 545 053 B1**
(45) Veröffentlichungstag und Bekanntmachung des Hinweises auf die Patenterteilung: **07.06.1995**
(21) Anmeldenummer: 92117956.0
(22) Anmeldetag: 21.10.1992
(51) Int. Cl.: A01J 11/10, A23C 9/15

(54) **Verfahren und Anlage zur Regulierung des Fettgehaltes von Milch**
Method and device for regulating the fat content of milk
Procédé et dispositif pour réguler la teneur en matières grasses du lait

(30) Priorität: 29.11.1991 DE 4139380
(43) Veröffentlichungstag der Anmeldung: 09.06.1993
(73) Patentinhaber: Westfalia Separator AG, 59302 Oelde (DE)
(72) Erfinder: Zettier, Karl-Heinz, W-4740 Oelde 1 (DE); Hanschmann, Werner, Dipl.-Ing., W-4740 Oelde 1 (DE); Wieking, Wolfgang, Dipl.-Ing., W-4740 Oelde 3 (DE)

(56) Entgegenhaltungen:
- DE-A- 2 531 141

## Beschreibung

Die Erfindung betrifft ein Verfahren zur Regulierung des des Fettgehaltes von Milch, bei dem die Vollmilch in Magermilch und Rahm separiert, danach der Magermilch ein Teil des Rahmes wieder zugeführt und die so gebildete standardisierte Milch zur Ableitung einer Steuergröße für die Regulierung der Zufuhrmenge des Rahmes herangezogen wird, wobei unter Ausnutzung der in der standardisierten Milch gemessenen Fettwerte zum Steuern des zugeführten Rahmes die Messung sich auf die physikalische Dichte erstreckt, die ebenfalls für die Magermilch ermittelt wird, wobei die Dichte der Magermilch in Meßintervallen ermittelt, der gemessene Wert gespeichert, anschließend die Dichte der standardisierten Milch gemessen und die Zufuhrmenge des Rahmes so gesteuert wird, daß sich zwischen der Magermilch und der standardisierten Milch eine vorbestimmte Dichtedifferenz einstellt, die dem gewünschten Fettgehalt in der standardisierten Milch entspricht.

Ein derartiges Verfahren ist aus der DE-OS 25 31 141 bekannt. Die Dichten der aus einer Zentrifuge ablaufenden Magermilch und des Rahmes werden hierbei mittels separater Meßeinrichtungen ermittelt, über die jeweils ein Teilstrom der beiden genannten Medien geleitet wird, der anschließend jeweils wieder mit dem Hauptstrom vereinigt wird. Die Regulierung der Rahmmenge, die der Magermilch zugeführt wird, um einen bestimmten Fettgehalt in der standardisierten Milch zu erzielen, basiert dabei auf der Dichtedifferenz, die zwischen diesen beiden Medien erfahrungsgemäß vorhanden ist.

Die Dichte ist jedoch nicht nur vom Fettgehalt allein, sondern auch von der fettfreien Trockenmasse, wie Proteine, Zucker, Mineralstoffe usw., und der Temperatur abhängig. Durch die Messung der Dichte der Magermilch sowie der standardisierten Milch und durch die Differenzbildung dieser Meßwerte sollen bei dem bekannten Verfahren jene Faktoren mit Ausnahme des Fettgehaltes eliminiert werden, so daß die Differenz der Meßwerte nur vom Unterschied des Fettgehaltes der Magermilch und des Fettgehaltes der standardisierten Milch abhängig ist. Da im Prinzip das gleiche Produkt durch beide Meßeinrichtungen strömt, wird davon ausgegangen, daß bei einer Einstellung einer dem gewünschten Fettgehalt in der standardisierten Milch entsprechenden Dichtedifferenz dieser Fettgehalt auch eingehalten wird.

Bei der Verwendung von zwei Meßeinrichtungen lassen sich jedoch zwei Fehlerquellen grundsätzlich nicht vermeiden. Zum einen sind dies fertigungsbedingte Toleranzen, die zu einer Abweichung des Meßergebnisses zwischen den beiden Meßeinrichtungen bei derselben Dichte des durchfließenden Produktes führen können, und zum anderen herrschen an den Einbauorten der Meßeinrichtungen unterschiedliche Strömungsbedingungen, weil sich beide Meßeinrichtungen im selben Leitungsstrang befinden und daher zwischen ihnen ein Druckgefälle zur Erzielung einer Strömung erforderlich ist. Insbesondere bei Produkten, die Luft enthalten können, wie dies bei Milch häufig der Fall ist, führt dieser Luftgehalt bei unterschiedlichen Drücken zu einem unterschiedlichen Ergebnis bei der Dichtemessung, obwohl der Fettgehalt derselbe ist.

Ein weiterer Meßfehler kann dadurch entstehen, daß sich der Fettgehalt der Magermilch im Laufe eines Betriebszyklusses verändert. Derartige Änderungen sind z. B. möglich durch nachlassende Trennleistung der Zentrifuge, Zugabe von homogenisierter Milch in die zu entrahmende Vollmilch, Änderung der Rahmkonzentration und unterschiedlichen Luftanteil in der Vollmilch. In diesem Fall führt die eingestellte Dichtedifferenz zwischen der ersten und der zweiten Meßeinrichtung nicht mehr zu dem gewünschten Fettgehalt in der standardisierten Milch.

Der Erfindung liegt die Aufgabe zugrunde, ein Verfahren zur Regulierung des Fettgehaltes in der standardisierten Milch zu schaffen, mit dem bei Verringerung des apparativen und regelungstechnischen Aufwandes der Fettgehalt genauer geregelt werden kann.

Diese Aufgabe wird dadurch gelöst, daß die Messung der Dichten der Magermilch und der standardisierten Milch in derselben Meßeinrichtung erfolgt, der bei jedem Meßintervall gemessene Wert der Magermilch mit dem gespeicherten Wert verglichen und erst bei einer Abweichung der Werte voneinander der zuletzt gemessene Wert anstelle des bisher gespeicherten Wertes gespeichert und die Zufuhrmenge des Rahmes jetzt so gesteuert wird, daß sich eine der Abweichung entsprechende veränderte Dichtedifferenz einstellt.

Da bei dem erfindungsgemäßen Verfahren nur eine einzige Meßeinrichtung für die Messung der Dichte der Magermilch und der standardisierten Milch benutzt wird, ist der apparative Aufwand geringer und Fertigungstoleranzen und Strömungsbedingungen wirken sich bei beiden Messungen in derselben Weise aus, so daß dadurch kein Fehler im Differenzwert zwischen den beiden Meßergebnissen entstehen kann. Außerdem wird keine konstante Dichtedifferenz zwischen der Magermilch und der standardisierten Milch als Steuergröße verwendet, sondern bei jedem Meßintervall wird festgestellt, ob diese Dichtedifferenz noch mit der zuvor gemessenen Dichte der Magermilch korrespondiert. Durch eine entsprechende Korrektur im Rechner, kann durch dieses Verfahren die erzielte Genauigkeit bei der Einstellung des Fettgehaltes in der standardisierten Milch erheblich gesteigert werden.

Eine vorteilhafte Ausgestaltung des Verfahrens ist dadurch gekennzeichnet, daß beim Steuern des zugeführten Rahmes ein Korrekturfaktor berücksichtigt wird, der die Veränderung des Eiweißgehaltes der standardisierten Milch bei verschiedenen Fettgehalten kompensiert.

Durch die teilweise Rückführung des von der Vollmilch abgetrennten Rahms in die Magermilch kommt es zu einer Verschiebung der Trockensubstanz in der standardisierten Milch, weil Rahm auch ein Träger von Milchinhaltsstoffen ist, deren Anteil abhängig ist von der Konzentration des Fettes. Bei der Herstellung von standardisierter Milch mit unterschiedlichen Fettgehalten werden unterschiedliche Rahmmengen abgeleitet, wodurch auch unterschiedliche Eiweißgehalte abgeführt werden. Bei der Zudosierung des Rahmes zur standardisierten Milch werden daher auch unterschiedliche Anteile an Eiweiß zugeführt. Da jetzt der prozentuale Anteil des Eiweißes in der Magermilch und in der standardisierten Milch nicht mehr identisch ist, führt dies zu einem Meßfehler bei der Bestimmung des Fettgehaltes der standardisierten Milch auf der Basis der ermittelten Dichte. Dieser Meßfehler wird durch den Korrekturfaktor kompensiert.

Die erfindungsgemäße Anlage zur Durchführung des Verfahrens mit einer eine Zulaufleitung für Vollmilch, eine Magermilchablaufleitung und eine Rahmablaufleitung aufweisenden Zentrifuge und mit einer die Rahmablaufleitung mit der Magermilchablaufleitung verbindenden Mischleitung ist dadurch gekennzeichnet, daß von der Magermilchablaufleitung eine mit einem Absperrorgan versehene erste Bypassleitung und eine mit einem Absperrorgan versehene zweite Bypassleitung von einer Leitung für standardisierte Milch abzweigt und beide Bypassleitungen in eine mit der Zulaufleitung verbundene Rückführleitung, in der eine einzige Meßeinrichtung zur Ermittlung der Dichte der Magermilch und der standardisierten Milch vorgesehen ist.

Weitere vorteilhafte Ausgestaltungen sind in den restlichen Unteransprüchen wiedergegeben.

Ein Ausführungsbeispiel der Erfindung ist in der Zeichnung dargestellt und wird nachstehend näher erläutert. Es zeigen:
- Fig. 1: eine schematische Darstellung der Anlage
- Fig. 2: die Eiweißverteilung in der standardisierten Milch bei verschiedenen Fettgehalten

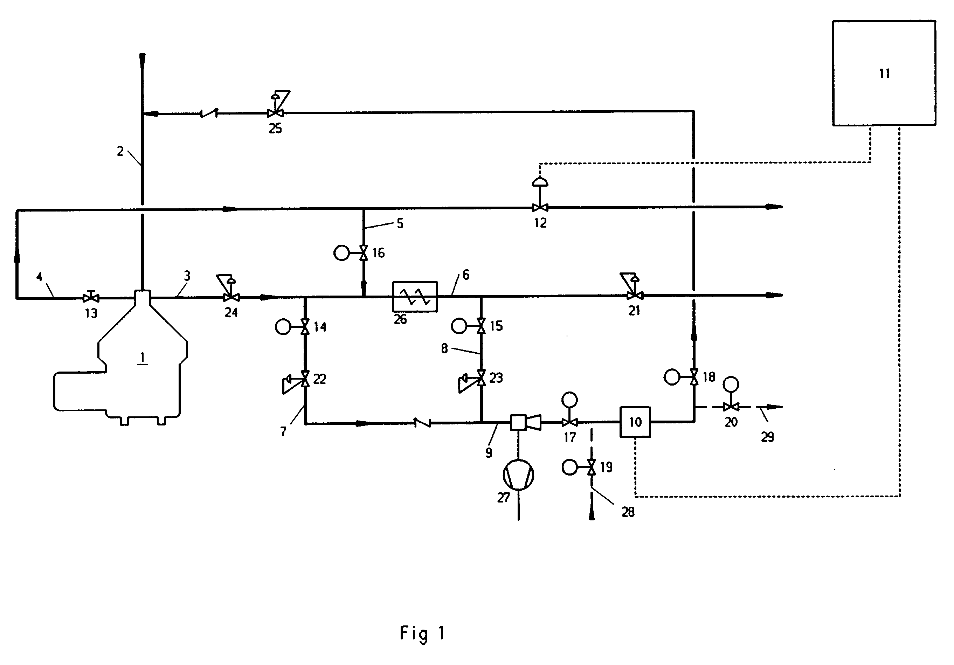

In der Fig. 1 ist mit 1 die Zentrifuge bezeichnet, die mit einer Zulaufleitung 2 für die Vollmilch, einer Magermilchablaufleitung 3 und einer Rahmablaufleitung 4 versehen ist, von der eine Mischleitung 5 abzweigt, die sich mit der Magermilchablaufleitung 3 zu einer Leitung 6 für standardisierte Milch verbindet. Von der Magermilchablaufleitung 3 führt eine erste Bypassleitung 7 und von der Leitung 6 für die standardisierte Milch eine zweite Bypassleitung 8 zu einer Rückführleitung 9, die mit der Zulaufleitung 2 verbunden ist. In der Rückführleitung 9 ist eine Meßeinrichtung 10 vorgesehen, die mit einer Steuereinheit 11 verbunden ist, die ihrerseits mit einem Regelventil 12 in der Rahmablaufleitung 4 in Verbindung steht. Mit den Ventilen 13 bis 20 kann der Durchfluß der entsprechenden Leitungen reguliert oder abgesperrt werden. Zur Aufrechterhaltung konstanten Durchflusses und konstanter Drücke sind Einrichtungen 21 bis 25 vorgesehen.

Die Vollmilch wird der Zentrifuge 1 über die Leitung 2 zugeführt und in Magermilch und Rahm separiert. Die Trennschärfe der Zentrifuge wird über die Ventile 13 und 24 eingestellt. Nach Aktivierung der Steuereinheit 11 öffnet diese zunächst das Ventil 14, wodurch ein Teilstrom Magermilch über die erste Bypassleitung 7 in die Rückführleitung 9 geleitet wird. Die Dichte der Magermilch wird durch die Meßvorrichtung 10 ermittelt. Der gemessene Dichtewert wird in der Steuereinheit 11 gespeichert und diesem gespeicherten Wert ein Differenzwert zugeordnet. Danach schließt die Steuereinheit 11 das Ventil 14 in der ersten Bypassleitung 7 und öffnet das Ventil 15 in der zweiten Bypassleitung 8, so daß jetzt ein Teilstrom Milch aus der Leitung 6 für die standardisierte Milch über die Rückführleitung 9 in die Meßeinrichtung 10 gelangt.

Die Steuereinheit 11 stellt nun Regelventil 12 in der Rahmablaufleitung 4 so ein, daß über die Mischleitung 5 der Magermilch in der Magermilchablaufleitung 3 soviel Rahm beigemischt wird, daß die Dichte der standardisierten Milch in der Leitung 6 dem vorgenannten Differenzwert entspricht. Diese Einstellung wird zunächst beibehalten, bis nach einem vorgegebenen Zeitintervall eine erneute Messung der Magermilch nach entsprechender Umschaltung der Ventile 14 und 15 durch die Steuereinheit 11 erfolgt.

Hat sich der Dichtewert für die Magermilch nicht verändert, so bleibt der gespeicherte Wert weiterhin die Basis für die Einstellung des Regelventiles 12. Wird aber eine Abweichung zum zuvor gemessenen Dichtewert der Magermilch festgestellt, so wird nun dieser Wert gespeichert, dem eine geänderte Dichtedifferenz zugeordnet ist, und das Regelventil 12 von der Steuereinheit entsprechend verstellt, um diese neue Dichtedifferenz herzustellen.

Da der Dichtewert der Magermilch nur in Intervallen überprüft wird, führen kurzzeitige kleinere Störungen auf der Magermilchseite nicht gleich zu Meßfehlern.

Die Messung der Dichte der durch die Meßeinrichtung fließenden Medien erfolgt frei von Druckschwankungen nachgeschalteter Einrichtungen, weil die Rückführleitung 9 in die Leitung 2 für die Vollmilch zurückgeleitet wird, die unter gleichmäßigem Druck steht. Die Rückführleitung 9 kann aber auch zu einem nicht dargestellten Vorlaufgefäß der Zentrifuge führen.

Zur intensiven Vermischung der Magermilch mit dem über Leitung 5 zugeführten Rahm ist in der Leitung 6 ein Mischer 26 vorgesehen.

In der Rückführleitung 9 ist vor der Meßeinrichtung eine Vakuumpumpe 27 installiert, die in Betrieb genommen wird, wenn der gespeicherte Wert zu sehr unterschritten wird.

Bei Überschreiten eingestellter Grenzwerte wird von der Steuereinheit 11 ein Alarm ausgelöst. Ursache hierfür können beispielsweise Ablagerungen auf in der Meßeinrichtung 10 vorgesehenen Meßsonden sein. Die Meßeinrichtung 10 kann dann nach Schließen der Ventile 17 und 18 und Öffnen der Ventile 19 und 20 in den Leitungen 28, 29 mit einer Reinigungslösung durchspült werden. Der Betrieb der Anlage muß zu diesem Zweck nicht unterbrochen werden.

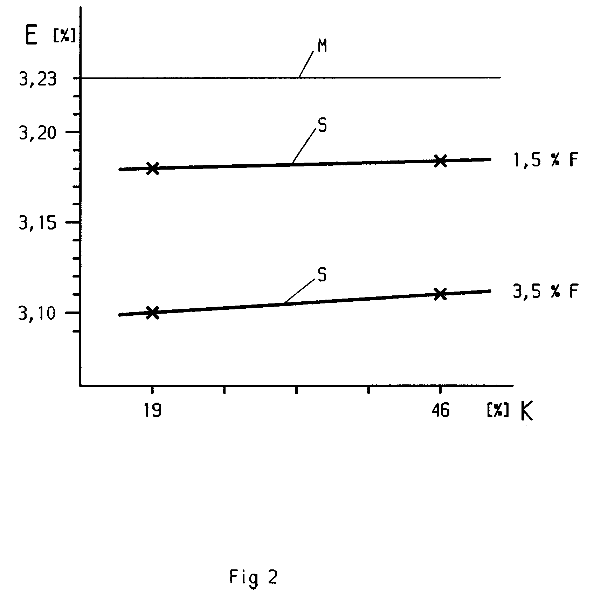

Aus der Fig. 2 ist ersichtlich, wie sich der Eiweißgehalt "E" in der standardisierten Milch "S" verändert, und zwar in Abhängigkeit von der Rahmkonzentration "K" und dem Fettgehalt "F" der standardisierten Milch. Der dadurch bedingte Meßfehler wird durch einen entsprechenden Korrekturfaktor kompensiert, der in der Steuereinheit 11 berücksichtigt wird. Als Vergleichswert dient die Magermilch "M".

## Patentansprüche

1. Verfahren zur Regulierung des Fettgehaltes von Milch, bei dem die Vollmilch in Magermilch und Rahm separiert, danach der Magermilch ein Teil des Rahmes wieder zugeführt und die so gebildete standardisierte Milch zur Ableitung einer Steuergröße für die Regulierung der Zufuhrmenge des Rahmes herangezogen wird, wobei unter Ausnutzung der in der standardisierten Milch gemessenen Fettwerte zum Steuern des zugeführten Rahmes die Messung sich auf die physikalische Dichte erstreckt, die ebenfalls für die Magermilch ermittelt wird, wobei die Dichte der Magermilch in Meßintervallen ermittelt, der gemessene Wert gespeichert, anschließend die Dichte der standardisierten Milch gemessen und die Zufuhrmenge des Rahmes so gesteuert wird, daß sich zwischen der Magermilch und der standardisierten Milch eine vorbestimmte Dichtedifferenz einstellt, die dem gewünschten Fettgehalt in der standardisierten Milch entspricht, **dadurch gekennzeichnet**, daß die Messung der Dichten der Magermilch und der standardisierten Milch in derselben Meßeinrichtung erfolgt, der bei jedem Meßintervall gemessene Wert der Magermilch mit dem gespeicherten Wert verglichen und erst bei einer Abweichung der Werte voneinander der zuletzt gemessene Wert anstelle des bisher gespeicherten Wertes gespeichert und die Zufuhrmenge des Rahmes jetzt so gesteuert wird, daß sich eine der Abweichung entsprechende veränderte Dichtedifferenz einstellt.

2. Verfahren nach Anspruch 1, dadurch gekennzeichnet, daß beim Steuern des zugeführten Rahmes ein Korrekturfaktor berücksichtigt wird, der die Veränderung des Eiweißgehaltes der standardisierten Milch bei verschiedenen Fettgehalten und Konzentrationen des Rahmes kompensiert.

3. Verfahren nach Anspruch 1 oder 2, dadurch gekennzeichnet, daß bei Überschreiten von vorgegebenen Grenzwerten bei der Messung der Dichte von Magermilch ein optisches und/oder akustisches Signal ausgelöst wird.

4. Anlage zur Durchführung des Verfahrens nach einem der Ansprüche 1 bis 3 mit einer eine Zulaufleitung für Vollmilch, eine Magermilchablaufleitung und eine Rahmablaufleitung aufweisenden Zentrifuge und mit einer die Rahmablaufleitung mit der Magermilchablaufleitung verbindenden Mischleitung, dadurch gekennzeichnet, daß von der Magermilchablaufleitung (3) eine mit einem Absperrorgan (14) versehene erste Bypassleitung (7) und eine mit einem Absperrorgan (15) versehene zweite Bypassleitung (8) von einer Leitung (6) für standardisierte Milch abzweigt und beide Bypassleitungen (7, 8) in eine mit der Zulaufleitung (2) verbundene Rückführleitung (9) münden, in der nur eine einzige Meßeinrichtung (10) zur Ermittlung der Dichte der Magermilch und der standardisierten Milch vor gesehen ist.

5. Anlage nach Anspruch 4, dadurch gekennzeichnet, daß die Bypassleitungen (7, 8) mit Einrichtungen (22, 23) zum Konstanthalten des Durchflusses versehen sind.

6. Anlage nach Anspruch 4 oder 5, dadurch gekennzeichnet, daß die Rückführleitung (9) im Bereich der Meßeinrichtung (10) mit Spülleitungen (28, 29) versehen ist.

7. Anlage nach einem der Ansprüche 4 bis 6, dadurch gekennzeichnet, daß die Rückführleitung (9) eine Einrichtung (25) zum Konstanthalten des Druckes beinhaltet.

## Claims

1. Process for the regulation of the fat content in milk in which the whole milk is separated into skim milk and cream after which a portion of the cream ice fed back into the skim milk and the thus standardised milk is used for the derivation of a control variable for the regulation of the feed volume of the cream, whereby, under utilisation of the fat values measured in the standardised milk to control the infed cream, the measurement refers to the physical density, which is likewise determined for the skim milk, whereby the density of the skim milk is determined at measuring intervals, the measured value is stored, the density of the standardised milk is subsequently measured and the feed volume of the cream is controlled such that a predetermined density difference is adjusted between the skim milk and the standardised milk, said density difference corresponding to the desired fat content in the standardised milk, **characterised in that** the measurement of the densities of the skim milk and the standardised milk is effected in the same measuring device, the skim milk value measured at each measuring interval is compared with the stored value and only in case of a deviation of the values from one another is the last measured value stored instead of the previously stored value and the feed volume of the cream is now controlled so that a changed density difference corresponding to the deviation is adjusted.

2. Process according to claim 1, characterised in that a correction factor is taken into account when regulating the infed cream which compensates the change in protein content of the standardised milk for different fat contents and concentrations of the cream.

3. Process according to claims 1 or 2 characterised in that an optical and/or acoustic signal is triggered when exceeding pre-set threshold values for the measurement of the skim milk density.

4. Installation for the execution of the process according to one of the claims 1 to 3 with a centrifuge equipped with a feed line for whole milk, a skim milk discharge line and a cream discharge line and with a mixing line connecting the cream discharge line with the skim milk discharge line, characterised in that a first bypass line (7) provided with a shut-off device (14) branches off from the skim milk discharge line (3) and a second bypass line (8) with a shut-off device (15) branches off from a line (6) for standardised milk and both bypass lines (7, 8) open up into a recycle line (9) connected with the feed line (2), the recycle line (9) being provided with just one measuring device (10) for determining the density of the skim milk and the standardised milk.

5. Installation according to claim 4, characterised in that the bypass lines (7, 8) are provided with devices (22, 23) to keep the flow constant.

6. Installation according to claim 4 or 5, characterised in that the recycle line (9) is provided in the area of the measuring device (10) with flush lines (28, 29).

7. Installation according to one of the claims 4 to 6, characterised in that the recycle line (9) incorporates a device (25) for maintaining the pressure constant.

## Revendications

1. Procédé pour le réglage de la teneur en matière grasse du lait, dans lequel le lait entier est séparé en lait écrémé et en crème, après quoi une partie de la crème est recyclé dans le lait écrémé et le lait ainsi standardisé est utilisé pour la déduction d'une valeur de commande pour le débit de recyclage de la crème et dans lequel, en faisant usage des valeurs de matière grasse mesurées dans le lait standardisé, la mesure s'étend sur la densité physique qui est d'ailleurs également déterminée pour le lait écrémé, la valeur mesurée étant mémorisée avant que la densité du lait standardisé est également mesurée et le débit de crème recyclée est commandé de telle manière qu'entre le lait écrémé et le lait standardisé on obtienne une différence de densités prédéterminée, correspondant à la teneur en matière grasse souhaitée du lait standardisé, **caractérisé en ce que** la mesure des densités du lait écrémé et du lait standardisé s'effectue par le même dispositif de mesure, que la valeur relevée dans chaque cycle de mesure est comparée avec la valeur mémorisée et, seulement en cas d'un écart entre celles-ci, la valeur de mesure plus récente est mémorisée au lieu de celle mise em mémoire auparavent, et que le débit de crème recyclée est commandé de telle manière qu'on obtienne alors une différence de densités modifiée en fonction de l'écart constaté.

2. Procédé selon revendication 1, caractérise en ce que, pour la commande du débit de crème recyclée, il est pris en considération un facteur correctif servant à compenser les variations de la teneur en protéines du lait se produisant en présence de différentes teneurs en matière grasse et concentrations de la crème.

3. Procédé selon revendication 1 ou 2, caractérisé en ce que, en cas d'un dépassement de valeurs limite prédéterminées survenant au cours de la mesure de la densité du lait écrémé, il sera déclenché un signal optique et/ou acoustique.

4. Installation permettant la réalisation du procédé selon l'une des revendications 1 à 3, constituée par une centrifugeuse équipée d'une conduite d'alimentation de lait entier, d'une conduite de sortie de lait écrémé et d'une conduite de sortie de crème, et par une conduite de mélange reliant la conduite de sortie de crème à celle de lait écrémé, caractérisée en ce que de la conduite de sortie de lait écrémé (3) il est dérivé une conduite by-pass (7) munie d'un organe d'arrêt (14) et d'une conduite de lait standardisé (6) il est dérivé une deuxième conduite by-pass (8) munie d'un organe d'arrêt (15) et que les deux conduites by-pass (7, 8) débouchent dans une conduite de recyclage (9) reliée à la conduite d'alimentation (2), la conduite de recyclage possédant un seul dispositif de mesure (10) déterminant les densités du lait écrémé et du lait standardisé.

5. Installation selon revendication 4, caractérisée en ce que les conduites by-pass (7, 8) sont équipées de dispositifs (22, 23) servant à maintenir constant le débit de passage.

6. Installation selon revendication 4 ou 5, caractérisée en ce que la conduite de recyclage (9) est munie de conduites de rinçage (28, 29) voisines du dispositif de mesure (10).

7. Installation selon l'une des revendications 4 à 6, caractérisée en ce que la conduite de recyclage (9) possède un dispositif (25) assurant une pression constante.
